# EUROPÄISCHE PATENTSCHRIFT

(11) **EP 3 498 082 B1**
(45) Veröffentlichungstag und Bekanntmachung des Hinweises auf die Patenterteilung: **11.11.2020**
(21) Anmeldenummer: 18199773.5
(22) Anmeldetag: 04.10.2010
(51) Int. Cl.: A01G 3/037

(54) **HANDBETÄTIGTE GARTENSCHERE**
MANUALLY OPERATED GARDEN SHEARS
SECATEUR À COMMANDE MANUELLE

(43) Veröffentlichungstag der Anmeldung: 19.06.2019
(62) Teilanmeldung aus: 17203943.0
(73) Patentinhaber: HUSQVARNA AB, 561 82 Huskvarna (SE)
(72) Erfinder: SCHIEDT, Christoph, 88319 Aitrach (DE); NÄGELE, Karl-Peter, 88441 Mittelbiberach (DE)

(56) Entgegenhaltungen:
- WO-A2-2008/023117
- DE-A1- 19 849 976
- DE-U1- 20 205 106

## Beschreibung

Die Erfindung betrifft eine handbetätigbare Gartenschere.

Bei handbetätigbaren Gartenscheren wird die Schließkraft, die zum Durchschneiden von zwischen Messern einer Messeranordnung befindlichem Schnittgut erforderlich ist, durch die Handkraft eines Benutzers aufgebracht, welcher die Schere an zwei relativ zueinander beweglichen Handhebeln mit einer Hand oder mit beiden Händen ergreift.

Insbesondere beim Schneiden von Ästen erweist sich häufig die Handkraft des Benutzers als nicht ausreichend, um einen Ast in einem Schneidvorgang durchzuschneiden, so dass umständlich mit mehreren Teilschnitten eine Durchtrennung des Astes versucht wird.

Aus der DE 202 05 106 U1 ist eine Gartenschere bekannt, bei der eine motorbetätigte Handkraftunterstützung zugeschaltet werden kann, wenn die Handkraft eine zwischen einem Handgriff und einer Schneide wirkende Federkraft übersteigt. Dabei wird die Handkraftunterstützung durch einen elektrischen Schalter eingeschaltet, wenn der Benutzer nach Überschreiten der Federkraft die beiden Handgriffe der Gartenschere schließt, so dass der Schalter aktiviert wird.

Aus der WO 2008/023117 A2 ist eine Handkraftunterstützung für Gartenscheren bekannt, die nach Art einer Seilwinde eine zusätzliche Schließkraft erzeugt. Die bekannte Handkraftunterstützung kann an den Handgriffen einer Gartenschere montiert werden, und ist dazu vorgesehen, beim Schließen der Gartenschere ein zur Handkraft des Benutzers proportionale Schließkraft bereitzustellen.

Der vorliegenden Erfindung liegt die Aufgabe zugrunde, eine handbetätigbare Gartenschere mit verbesserter Handhabung anzugeben.

Die Erfindung ist im unabhängigen Anspruch beschrieben. Die abhängigen Ansprüche enthalten vorteilhafte Ausgestaltungen und Weiterbildungen der Erfindung.

Durch die zuschaltbare motorische Schließkraft, worunter eine Ansteuerung des Antriebsmotors zur Ausübung einer solchen motorischen Schließkraft auf die Messeranordnung zu verstehen sei, können vorteilhafterweise Schneidvorgänge in einem Zug durchgeführt werden. Erfindungsgemäß steuert eine Steuereinrichtung nach Maßgabe eines bestimmten Wertes einer Kenngröße eines Schneidvorgangs den Antriebsmotor an und schaltet die motorische Antriebskraft zu. Die Kenngröße ist eine vom Benutzer auf die Griffanordnung ausgeübte Handkraft, welche durch ein Handkraft-Sensorsignal eines Handkraft-Sensors repräsentiert ist.

Bei bevorzugter Beibehaltung der Handkraft-Betätigung auch nach Zuschalten der motorischen Schließkraft kann eine Gesamtkraft für den Schließvorgang aufgebracht werden, welche höher ist als die motorische Schließkraft, so dass der Antriebsmotor, welcher die motorische Schließkraft aufbringt, vorteilhafterweise in kleiner Bauform und/oder mit geringer Leistungsaufnahme ausgeführt sein kann. Die geringe Leistungsaufnahme ist insbesondere von Vorteil bei einer bevorzugten Ausführung mit einem Elektromotor als Antriebsmotor und einem Akkumulator als elektrische Energiequelle. Bei Verwendung der motorischen Schließkraft lediglich als Zusatzkraft zu der Handkraft des Benutzers kann dann der Akkumulator in kleiner Bauform ausgeführt und/oder eine lange Nutzungsdauer des Akkumulators erreicht werden.

Die motorische Schließkraft kann bei Bedarf mittels eines Betätigungselements, insbesondere eines mit einem Finger einer den Handgriff greifenden Benutzerhand erreichbaren Betätigungselements zugeschaltet werden, insbesondere indem über ein solches Betätigungselement ein Schalter in der Stromversorgung des Elektromotors aus dem Akkumulator geschlossen wird.

Erfindungsgemäß erfolgt die Zuschaltung der motorischen Schließkraft automatisch durch eine elektronische Steuereinrichtung nach Maßgabe wenigstens einer Kenngröße des Schneidvorgangs, wobei eine solche Kenngröße mittels wenigstens eines Sensors und einem durch diesen gewonnenen und in der Steuereinrichtung ausgewerteten Sensorsignal bestimmt wird.

Ein Handkraft-Sensor ist vorteilhafterweise in einen von zwei unter der Einwirkung der Handkraft relativ zueinander verlagerbaren Handgriffen integriert und kann in vorteilhafter Ausführung durch eine Wägezelle gegeben sein. Soweit auch vorteilhafterweise die motorische Schließkraft auf die Handgriffanordnung einwirkt, ist bevorzugt der Handkraftsensor im Kraftübertragungsweg der Handkraft zur Messeranordnung vor dem Angriffspunkt der motorischen Schließkraft angeordnet.

Erfindungsgemäß ist für die Handkraft bzw. das Handkraft-Sensorsignal als erstem Sensorsignal ein Schwellwert vorgegeben in der Art, dass die Steuereinrichtung bei unter dem Schwellwert liegendem Messwert des Sensorsignals die motorische Schließkraft nicht zuschaltet. Hierdurch wird zum einen die Energiereserve eines Akkumulators geschont und zum anderen vermieden, dass bei einem von dem Benutzer gezielt mit geringer Krafteinwirkung geführten Schnitt ungewollt die motorische Schließkraft zugeschaltet wird. Der Schwellwert kann veränderlich vorgebbar sein, um eine Anpassung des Steuerverhaltens der Steuereinrichtung an kräftigere und weniger kräftige Benutzer zu ermöglichen.

Eine weitere Kenngröße zur Auswertung in der Steuereinrichtung kann in vorteilhafter Ausführung die Schließgeschwindigkeit der Messeranordnung sein. Die Schließgeschwindigkeit der Messeranordnung kann in vorteilhafter Ausführung aus zeitlich aufeinander folgend ermittelten Winkelwerten eines Schließwinkels der Messeranordnung oder der Handgriffanordnung in der Steuereinrichtung gewonnen werden. Schließwinkelwerte lassen sich in vorteilhaft einfacher Weise über einen mit beiden Messern der Messeranordnung und/oder beiden Griffhebeln der Handgriffanordnung verbundenen zweiten Sensor, insbesondere einen kapazitiven Sensor oder vorzugsweise ein Potentiometer ermitteln. In bevorzugter Ausführung ist ein zweiter Sensor als Drehsensor um das Scherengewerbe ausgeführt. Soweit eine Winkelmessung in definierten gleichbleibenden Zeitabschnitten erfolgt, kann auch eine Winkeldifferenz, welche dann mit einem konstanten Faktor zur Schließgeschwindigkeit proportional ist, direkt ausgewertet werden.

Eine Auswertung eines über den zweiten Sensor gewonnenen Werts für die Schließgeschwindigkeit bzw. eine diese Schließgeschwindigkeit repräsentierende Größe zur eventuellen Zuschaltung der motorischen Schließkraft kann in der Steuereinrichtung insbesondere in der Weise erfolgen, dass die motorische Schließkraft nicht zugeschaltet wird, solange die Schließgeschwindigkeit nicht unter einen vorgebbaren zweiten oberen Schwellwert fällt.

In bevorzugter Ausführungsform erfolgt eine Steuerung der zuschaltbaren motorischen Schließkraft in der Weise, dass die Steuereinrichtung die motorische Schließkraft nur zuschaltet, wenn das Handkaft-Sensorsignal den ersten Schwellwert übersteigt und die Schließgeschwindigkeit unter dem zweiten oberen Schwellwert liegt.

Wenn die motorische Schließkraft durch die Steuereinrichtung gemäß den dort vorgegebenen Kriterien für eine oder mehrere Kenngrößen des Schneidvorgangs zugeschaltet ist, kann in erster einfacher Ausführung der Antriebsmotor ohne weitere Differenzierung eingeschaltet bleiben. Der Antriebsmotor wird bei Erreichen einer Endstellung des Schneidvorgangs, welche durch einen Endschalter oder vorzugsweise durch einen Schließwinkelsensor für die Steuereinrichtung erkennbar ist, abgeschaltet.

Eine Beibehaltung der motorischen Schließkraft bis zur Endstellung des Schneidvorgangs kann insbesondere auch vorgesehen sein, wenn das Handkraft-Sensorsignal unter den ersten Schwellwert fällt, so dass die Fortsetzung des Schneidvorgangs nach Zuschalten der motorischen Schließkraft ohne besonderen Kraftbeitrag durch die Handkraft eines Benutzers erfolgt.

Erfindungsgemäß schaltet die Steuerung die motorische Schließkraft wieder ab, wenn die Handkraft des Benutzers allein für die Fortsetzung des Schneidvorgangs ausreicht. Erfindungsgemäß erfolgt die Steuerung der motorischen Schließkraft nach deren Zuschaltung unter weiterer fortlaufender Überprüfung der Kenngrößen des Schneidvorgangs adaptiv, indem beispielsweise die Höhe der motorischen Schließkraft durch die Steuereinrichtung variabel steuerbar ist und erfindungsgemäß die motorische Schließkraft auch wieder abschaltbar ist, wenn die Handkraft des Benutzers allein für die Fortsetzung des Schneidvorgangs ausreicht. Eine solche adaptive Steuerung trägt vorteilhaft dem Umstand Rechnung, dass beim Schneiden eines Astes die aufzuwendende Kraft bzw. die Widerstandskraft des Astes im Bereich der Hälfte des Schneidvorgangs bei der Astmitte ein Maximum durchläuft und danach wieder abfällt, so dass eine motorische Zusatzkraft primär in dem Bereich der Astmitte benötigt wird.

In vorteilhafter Ausführung kann vorgesehen sein, die zugeschaltete motorische Schließkraft abzuschalten, wenn die Schließgeschwindigkeit trotz der Einwirkung der motorischen Schließkraft auf oder unter einen zweiten unteren Schwellwert fällt. Ein sehr niedriger Wert der Schließgeschwindigkeit trotz hoher Handkraft und zusätzlicher motorischer Schließkraft kann dabei als Anzeichen gewertet werden, dass der Schneidvorgang nicht zu Ende gebracht werden kann. Der zweite untere Schwellwert kann insbesondere auch einer Schließgeschwindigkeit gleich Null entsprechen. Ein Öffnen der Messeranordnung kann als eine Schließgeschwindigkeit kleiner als Null interpretiert werden.

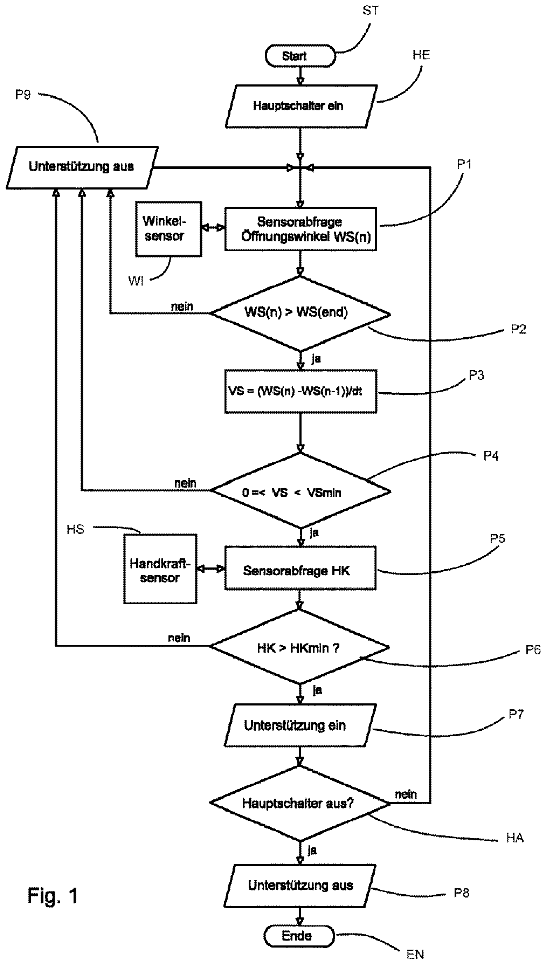

Die Erfindung ist nachfolgend anhand eines in Fig. 1 dargestellten Ablaufschemas einer bevorzugten Steuerungsvariante noch eingehend veranschaulicht. Bei dem in Fig. 1 dargestellten Ablaufschema sind die mit Start ST und Ende EN bezeichneten Felder lediglich als Teile des Ablaufschemas zu verstehen, ohne dass damit konkrete Geräteaktionen verbunden sind.

Aus Sicherheitsgründen ist an dem Gerät ein Hauptschalter vorgesehen, mittels welchem die Stromzuführung zu dem Antriebsmotor und eventuell der elektronischen Steuereinrichtung unabhängig von einer Steuerung des Antriebsmotors durch die Steuereinrichtung hergestellt bzw. unterbrochen werden kann und welcher in einem ersten Schritt HE vom Benutzer eingeschaltet wird.

Die Zuschaltung einer motorischen Schließkraft sei nachfolgend und in Fig. 1 als Unterstützung, d. h. Unterstützung der Handkraftbetätigung der Schere bezeichnet und verstanden.

Der Ablauf der Steuerung in der Steuereinrichtung umfasst eine Mehrzahl aufeinander folgender Zyklen, in welchen jeweils Kenngrößen des aktuellen Schneidvorgangs bestimmt und ausgewertet werden. Zur Ermittlung von aktuellen Werten von Kenngrößen sind insbesondere ein Winkelsensor WT, welcher zur Bestimmung eines aktuellen Öffnungswinkels WS (n) der Messeranordnung und/oder der Handgriffanordnung der Gartenschere ausgebildet ist, und ein Handkraftsensor HS, welcher zur Messung einer vom Benutzer auf die Handgriffanordnung ausgeübten Handkraft HK in Schließrichtung der Handgriffanordnung eingerichtet ist, vorgesehen.

Bei dem skizzierten Steuerungsablauf wird anfänglich in einem Schritt P1 durch die Steuereinrichtung von einem Winkelsensor WI der aktuelle Öffnungswinkel WS (n) abgefragt und der abgefragte Wert WS (n) des Öffnungswinkels wird im Schritt P2 mit einem für den Winkelsensor abgespeicherten und der Endstellung der Schließbewegung der Messeranordnung entsprechenden Grenzwert WS (end) verglichen. Solange ein aktueller Schneidvorgang nicht abgeschlossen ist, ist die Messeranordnung der Schere nicht vollständig geschlossen und der aktuell gemessene Wert WS (n) des Öffnungswinkels ist größer als der gespeicherte Grenzwert für den Öffnungswinkel. In diesem Falle schreitet die Steuereinrichtung in dem Verarbeitungsablauf zu P3 weiter und bestimmt aus dem aktuellen Wert WS (n) des Öffnungswinkels und wenigstens einem aus einem um eine Zeitspanne dt zurückliegenden Wert WS (n-1) des Öffnungswinkels einen aktuellen Wert für die Schließgeschwindigkeit VS = (WS(n) - WS (n-1)) dt. Bei gleichbleibenden Zeitspannen dt zwischen verglichenen Winkelwerten kann als Maß für die Schließgeschwindigkeit auch nur die Winkeldifferenz WS (n) - WS (n-1) bestimmt und ausgewertet werden.

Dieser für die Schließgeschwindigkeit bestimmte Wert VS wird danach im Schritt P4 mit einem Schwellwert VSmin verglichen.

Wenn die so ermittelte Schließgeschwindigkeit größer als Null ist, aber einen abgespeicherten Mindestwert VSmin unterschreitet, was auf eine für die Fortsetzung des Schneidvorgangs eventuell kritische Widerstandskraft des zuschneidenden Astes im Vergleich zur maximal möglichen Handkraft des Benutzers hindeutet, wird in einem Schritt P5 zusätzlich von einem Handkraftsensor HS die aktuell von dem Benutzer auf die Handgriffanordnung ausgeübte Handkraft HK abgefragt und im Schritt P6 mit einem gespeicherten Schwellwert HKmin verglichen.

Liegt bei dem letztgenannten Vergleich in P6 die durch die Steuereinrichtung von dem Handkraftsensor abgefragte Handkraft über dem gespeicherten Schwellwert HKmin, so wird dies im Sinne der Prüfkriterien der Steuereinrichtung so interpretiert, dass der Benutzer versucht, mit der ihm zur Verfügung stehenden Kraft den Schneidvorgang fortzusetzen, dass aber wegen der geringen Schneidgeschwindigkeit VS der Benutzer mit der ihm zur Verfügung stehenden Kraft an seine Grenzen stoßen könnte. Bei über der ersten Schwelle HKmin liegender Handkraft HK und gleichzeitig unter der zweiten oberen Schwelle VSmin liegender Schneidgeschwindigkeit VS wird daher als Schritt P7 die Kraftunterstützung eingeschaltet, indem die Steuereinrichtung den Antriebsmotor, welcher die motorische Schließkraft aufbringt, einschaltet.

Bei eingeschalteter Unterstützung wird in jedem Zyklus in einem Schritt P8 überprüft, ob der Hauptschalter noch eingeschaltet ist und gegebenenfalls ein neuer Prüfzyklus mit erneuter Abfrage des Öffnungswinkels WS begonnen.

Wenn im Verlauf eines Schneidvorgangs die Endstellung der Schließbewegung erreicht ist, ergibt sich für den Öffnungswinkel ein Wert WS (n), welcher nicht mehr größer ist als der gespeicherte Grenzwert WS (end), und nach dem Vergleich in P2 wird die Unterstützung gemäß P9 ausgeschaltet.

Wenn sich beim Vergleich der Schließgeschwindigkeit VS mit dem gespeicherten zweiten oberen Schwellwert VSmin in P4 ergibt, dass die aktuelle Schneidgeschwindigkeit größer ist als der gespeicherte zweite obere Grenzwert, wird dies im Sinne der Prüfkriterien der Steuereinrichtung so interpretiert, dass der Schneidvorgang hinreichend zügig allein durch die Benutzerkraft erfolgen kann und eine Unterstützung durch die motorische Schließkraft nicht erforderlich ist. In diesem Falle unterbleibt gemäß P9 das Zuschalten der Unterstützung.

Wenn zwar die Überprüfung der Schneidgeschwindigkeit in P4 auf die Notwendigkeit einer Unterstützung hinweist, die aktuelle Handkraft HK aber kleiner ist als der erste Schwellwert HKmin wird dies im Sinne der Prüfkriterien der Steuereinrichtung im Schritt P6 so interpretiert, dass der Benutzer ausreichend Kraftreserven für einen allein durch Handkraft durchgeführten Schnitt besitzt und den Schneidvorgang bewußt mit geringer Schneidgeschwindigkeit durchführt. Auch in diesem Fall unterbleibt gemäß P9 die Zuschaltung der Unterstützung.

Wenn der Hauptschalter ausgeschaltet wird, wird auch eine zuvor durch die Steuereinrichtung zugeschaltete Unterstützung ausgeschaltet, wobei typischerweise mit Ausschalten des Hauptschalters auch die Stromzufuhr zu dem die motorische Schließkraft aufbringenden Antriebsmotor unterbrochen ist und das Ausschalten der Unterstützung vor dem Ende des Ablaufschemas dann im wesentlichen als ein Rücksetzen der Steuereinrichtung zu verstehen ist.

Der anhand der Fig. 1 schematisch skizzierte Ablauf einer Steuerung durch die Steuereinrichtung ist lediglich als ein vorteilhaftes Beispiel zu sehen, welches auf verschiedene Arten abgewandelt werden kann. Insbesondere kann die Reihenfolge der Abfrage der beiden dargestellten Sensoren zeitlich umgekehrt liegen. Durch Sensorabfrage gewonnene Werte können über mehrere Zyklen gemittelt werden, um Falschreaktionen der Steuerung durch zufällige Schwankung von Sensormesswerten zu vermeiden. Zusätzlich können Plausibilitätsprüfungen von Sensorwerten vorgesehen sein.

## Patentansprüche

1. Handbetätigte Gartenschere mit einer Messeranordnung, welche in einem geöffneten Zustand zur Aufnahme eines Schnittguts ausgebildet ist und für einen Schneidvorgang durch Einwirkung einer Handkraft auf eine Griffanordnung schließbar ist, wobei ein Antriebsmotor vorhanden ist, um eine motorische Schließkraft auf die Messeranordnung zuzuschalten, wobei wenigstens ein Sensor zur Bestimmung einer Kenngröße eines Schneidvorgangs vorgesehen ist und eine elektronische Steuereinrichtung nach Maßgabe eines bestimmten Wertes der Kenngröße den Antriebsmotor ansteuert und die motorische Antriebskraft zuschaltet, wobei
der Sensor zur Abgabe eines die Kenngröße repräsentierenden SensorSignals eingerichtet ist, und der Sensor zur Abgabe eines die von einem Benutzer auf die Griffanordnung ausgeübte Handkraft repräsentierenden Handkraft-Sensorsignals eingerichtet ist, wobei in der Steuereinrichtung ein Schwellwert für das Handkraft-Sensorsignal vorgegeben ist, und die Steuereinrichtung die motorische Schließkraft bei unter dem Schwellwert liegendem Handkraft-Sensorsignal nicht zuschaltet, **dadurch gekennzeichnet, dass** die Steuerung der motorischen Schließkraft nach deren Zuschaltung unter weiterer fortlaufender Überprüfung der Kenngrößen des Schneidvorgangs adaptiv erfolgt, indem die Steuereinrichtung die motorische Schließkraft abschaltet, wenn die Handkraft des Benutzers allein für die Fortsetzung des Schneidvorgangs ausreicht.

2. Gartenschere nach Anspruch 1, **dadurch gekennzeichnet, dass** der Sensor eine mit einem von zwei Griffen der Griffanordnung verbundene Wägezelle enthält.

3. Gartenschere nach Anspruch 1 oder 2, **dadurch gekennzeichnet, dass** der Schwellwert veränderlich vorgebbar ist.

4. Gartenschere nach einem der Ansprüche 1 bis 3, **dadurch gekennzeichnet, dass** ein weiterer Sensor zur Bestimmung der Schließgeschwindigkeit der Messeranordnung eingerichtet ist.

5. Gartenschere nach Anspruch 4, **dadurch gekennzeichnet, dass** der weitere Sensor zur Abgabe eines den Schließwinkel der Messeranordnung repräsentierenden weiteren Sensorsignals eingerichtet ist und die Steuereinrichtung aus zeitlich aufeinander folgend gewonnenen weiteren Sensorsignalen die Schließgeschwindigkeit ermittelt.

6. Gartenschere nach Anspruch 5, **dadurch gekennzeichnet, dass** der weitere Sensor ein Drehpotentiometer um das Scherengewerbe enthält.

7. Gartenschere nach einem der Ansprüche 5 bis 6, **dadurch gekennzeichnet, dass** für die Schließgeschwindigkeit ein oberer Schwellwert vorgegeben ist, insbesondere wobei
die Steuereinrichtung die motorische Antriebskraft nicht zuschaltet, wenn die bestimmte Schließgeschwindigkeit über dem oberen Schwellwert liegt.

8. Gartenschere nach einem der Ansprüche 5 bis 7, **dadurch gekennzeichnet, dass** für die Schließgeschwindigkeit ein unterer Schwellwert vorgegeben ist und die Steuereinrichtung die motorische Antriebskraft nicht zuschaltet oder nach vorangegangener Zuschaltung abschaltet, wenn die bestimmte Schließgeschwindigkeit auf dem unteren Schwellwert oder darunter liegt, insbesondere wobei der untere Schwellwert einer Schließgeschwindigkeit gleich Null entspricht.

9. Gartenschere nach Anspruch 1 und 8, **dadurch gekennzeichnet, dass** die Steuereinrichtung die motorische Schließkraft zuschaltet, wenn das Handkraft-Sensorsignal über dem Schwellwert und die Schließgeschwindigkeit unter dem oberen Schwellwert liegt.

10. Gartenschere nach Anspruch 9, **dadurch gekennzeichnet, dass** die Steuereinrichtung die motorische Schließkraft abschaltet, wenn das Handkraft-Sensorsignal den Schwellwert unterschreitet und/oder wenn die Schließgeschwindigkeit den oberen Schwellwert überschreitet.

11. Gartenschere nach einem der Ansprüche 1 bis 10, **dadurch gekennzeichnet, dass** der Antriebsmotor ein Elektromotor ist.

12. Gartenschere nach Anspruch 11, **dadurch gekennzeichnet, dass** der Elektromotor und die Steuereinrichtung aus einer Batterie gespeist sind.

## Claims

1. Manually operated garden shears having a blade arrangement, which is formed in an opened state to receive cuttings and can be closed for a cutting procedure by the effect of manual force on a handle arrangement, wherein a drive motor is available to apply a motorised closing force to the blade arrangement, wherein at least one sensor is provided to determine a parameter of a cutting procedure, and an electronic control device controls the drive motor according to a certain value of the parameter and switches on the motorised drive force,
wherein the sensor is equipped to emit a sensor signal representing the parameter, and the sensor is equipped to emit a manual force sensor signal representing the manual force exerted by the user on the handle arrangement, wherein a threshold value for the manual force sensor signal is predetermined in the control device, and
the control device does not switch on the motorised closing force in the case of the manual force sensor signal being below the threshold value, **characterised in that**
the control of the motorised closing force after it has been switched on takes place adaptively under further continuous review of the parameters of the cutting procedure, by the control device switching off the motorised closing force when the manual force of the user alone is sufficient for the continuation of the cutting procedure.

2. Garden shears according to claim 1, **characterised in that** the sensor contains a load cell connected to one of two handles of the handle arrangement.

3. Garden shears according to claim 1 or 2, **characterised in that** the threshold value is variably predeterminable.

4. Garden shears according to one of claims 1 to 3, **characterised in that** a further sensor is equipped to determine the closing speed of the blade arrangement.

5. Garden shears according to claim 4, **characterised in that** the further sensor is equipped to emit a further sensor signal representing the closing angle of the blade arrangement, and the control device determines the closing speed from temporally successively obtained further sensor signals.

6. Garden shears according to claim 5, **characterised in that** the further sensor contains a rotary potentiometer around the shears' articulation.

7. Garden shears according to one of claims 5 to 6, **characterised in that** an upper threshold value is predetermined for the closing speed, in particular wherein
the control device does not switch on the motorised drive force when the determined closing speed is above the upper threshold value.

8. Garden shears according to one of claims 5 to 7, **characterised in that** a lower threshold value is predetermined for the closing speed, and the control device does not switch on the motorised drive force or switch it off after preceding switching on when the determined closing speed is at the lower threshold value or below it, in particular wherein
the lower threshold value corresponds to a closing speed equal to zero.

9. Garden shears according to claim 1 and 8, **characterised in that** the control device switches on the motorised closing force when the manual force sensor signal is above the threshold value and the closing speed is below the upper threshold value.

10. Garden shears according to claim 9, **characterised in that** the control device switches off the motorised closing force when the manual force sensor signal falls below the threshold value and/or when the closing speed exceeds the upper threshold value.

11. Garden shears according to one of claims 1 to 10, **characterised in that** the drive motor is an electric motor.

12. Garden shears according to claim 11, **characterised in that** the electric motor and the control device are fed from a battery.

## Revendications

1. Sécateur à actionnement manuel comportant un ensemble de lames qui est conçu pour recevoir, en position ouverte, un élément à couper et qui est refermable pour effectuer un processus de coupe sous l'action d'une force manuelle exercée sur un ensemble de poignées ; dans lequel est présent un moteur d'entraînement permettant de mettre en œuvre une force de fermeture à assistance motrice sur l'ensemble de lames, au moins un capteur étant prévu pour déterminer un paramètre d'un processus de coupe et une unité de commande électronique commandant le moteur d'entraînement conformément à une valeur déterminée du paramètre et mettant en œuvre la force de fermeture à assistance motrice ;
dans lequel
le capteur est conçu pour émettre un signal de capteur représentatif du paramètre, et le capteur est conçu pour émettre un signal de capteur propre à la force manuelle représentatif de la force manuelle exercée par un utilisateur sur l'ensemble de poignées, une valeur seuil relative au signal de capteur propre à la force manuelle étant prédéfinie dans l'unité de commande, et l'unité de commande ne mettant pas en œuvre la force de fermeture à assistance motrice lorsque le signal de capteur propre à la force manuelle est inférieur à ladite valeur seuil,
**caractérisé en ce que** la commande de la force de fermeture à assistance motrice, une fois mise en œuvre, s'effectue de manière adaptative sous une surveillance supplémentaire continue des paramètres du processus de coupe, ladite unité de commande mettant fin à la force de fermeture à assistance motrice lorsque la force manuelle de l'utilisateur est suffisante à elle seule pour continuer le processus de coupe.

2. Sécateur selon la revendication 1, **caractérisé en ce que** le capteur contient une cellule de pesée reliée à l'une des deux poignées de l'ensemble de poignées.

3. Sécateur selon la revendication 1 ou 2, **caractérisé en ce que** la valeur seuil est prédéfinissable de façon variable.

4. Sécateur selon l'une des revendications 1 à 3, **caractérisé en ce qu'**un capteur supplémentaire est conçu pour déterminer la vitesse de fermeture de l'ensemble de lames.

5. Sécateur selon la revendication 4, **caractérisé en ce que** le capteur supplémentaire est conçu pour émettre un signal de capteur supplémentaire représentatif de l'angle de fermeture de l'ensemble de lames et l'unité de commande évalue la vitesse de fermeture à partir de signaux de capteur supplémentaires acquis à des instants successifs.

6. Sécateur selon la revendication 5, **caractérisé en ce que** le capteur supplémentaire contient un potentiomètre rotatif autour de l'articulation du sécateur.

7. Sécateur selon l'une des revendications 5 et 6, **caractérisé en ce qu'**une valeur seuil supérieure est prédéfinie pour la vitesse de fermeture ; et notamment dans lequel l'unité de commande ne met pas en œuvre la force de fermeture à assistance motrice lorsque la vitesse de fermeture déterminée est supérieure à la valeur seuil supérieure.

8. Sécateur selon l'une des revendications 5 à 7, **caractérisé en ce qu'**une valeur seuil inférieure est prédéfinie pour la vitesse de fermeture et **en ce que** l'unité de commande ne met pas en œuvre la force de fermeture à assistance motrice ou l'interrompt après une mise en œuvre précédente lorsque la vitesse de fermeture déterminée est inférieure ou égale à la valeur seuil inférieure ; et notamment dans lequel
la valeur seuil inférieure correspond à une vitesse de fermeture nulle.

9. Sécateur selon la revendication 1 et 8, **caractérisé en ce que** l'unité de commande met en œuvre la force de fermeture à assistance motrice lorsque le signal de capteur propre à la force manuelle est supérieur à la valeur seuil et que la vitesse de fermeture est inférieure à la valeur seuil supérieure.

10. Sécateur selon la revendication 9, **caractérisé en ce que** l'unité de commande interrompt la force de fermeture à assistance motrice lorsque le signal de capteur propre à la force manuelle tombe sous la valeur seuil et/ou lorsque la vitesse de fermeture dépasse la valeur seuil supérieure.

11. Sécateur selon l'une des revendications 1 à 10, **caractérisé en ce que** le moteur d'entraînement est un moteur électrique.

12. Sécateur selon la revendication 11, **caractérisé en ce que** le moteur électrique et l'unité de commande sont alimentés par une batterie.
